# EUROPEAN PATENT APPLICATION

(11) **EP 3 706 095 A1**
(43) Date of publication of application: **09.09.2020**
(21) Application number: 18872692.1
(22) Date of filing: 29.10.2018
(51) Int. Cl.: G08G 1/00, G06Q 50/10

(54) **EVALUATION DEVICE, EVALUATION SYSTEM, VEHICLE, AND PROGRAM**

(30) Priority: 02.11.2017 JP 2017212715
(71) Applicant: Omron Corporation, Kyoto-shi, Kyoto 600-8530 (JP)
(72) Inventor: KASAI, Kazuki, Kizugawa-shi, Kyoto 619-0283 (JP); AIDA, Koichi, Kizugawa-shi, Kyoto 619-0283 (JP); IMABAYASHI, Tomonari, Kizugawa-shi, Kyoto 619-0283 (JP); KITAMURA, Eizo, Kizugawa-shi, Kyoto 619-0283 (JP); OHMAE, Hideto, Kizugawa-shi, Kyoto 619-0283 (JP); SAKUMA, Atsushi, Kizugawa-shi, Kyoto 619-0283 (JP); FUJINO, Minoru, Kizugawa-shi, Kyoto 619-0283 (JP)
(74) Representative: Becker, Eberhard
(86) International application number: PCT/JP2018/040154
(87) International publication number: WO 2019/088033

(57) **Abstract**

In order to realize a technology with which it is possible to evaluate a service provider from which a service user can receive a service with ease, an evaluation device (1) is characterized by being equipped with: an information analysis unit (5) for calculating degree-of-ease information indicating a degree of ease of a service user from the service user's countenance; and a service provider evaluation unit (4) for calculating an evaluation of a service provider from the degree-of-ease information.

## Description

### BACKGROUND OF THE INVENTION

### 1. Field of the Invention

The invention relates to an evaluation device, an evaluation system, a vehicle, and a program.

### 2. Description of Related Art

A technology of determining a dangerous driving behavior of a driver from driving history information has been known (Patent Document 1). In addition, Patent Document 2 recites a technology of obtaining the countenance of a user and controlling an operation of an electrical appliance to bring at least one of a sense of ease and a sense of satisfaction to the user.

### [Prior art document(s)]

### [Patent document(s)]

[Patent Document 1] Japanese Laid-open No. 2016-197308 (published on January 24, 2016)
[Patent Document 2] Japanese Laid-open No. 2017-068681 (published on April 6, 2017)

### SUMMARY OF THE INVENTION

### [Issue(s) to be solved by the invention]

However, in the conventional technologies above, whether a service user receives a service from a service provider with ease cannot be evaluated.

Therefore, according to an aspect of the invention, the objective is to realize a technology with which it is possible to evaluate a service provider from which a service user can receive a service with ease.

### [Means for solving the problem]

In order to solve the above issue, an evaluation device according to an aspect of the invention includes: a service user information obtaining unit, obtaining a countenance indicating a countenance of a service user; an information analysis unit, calculating degree-of-ease information indicating a degree of ease of the service user from the countenance; and a service provider evaluation unit, calculating an evaluation on a service provider from the degree-of-ease information.

According to the above configuration, a technology with which it is possible to evaluate a service provider from which a service user can receive a service with ease can be realized.

In order to solve the above issue, an evaluation device according to a second aspect of the invention may further include an environmental information obtaining unit obtaining environmental information which is information of a service providing location or information external of the service providing location, and the service provider evaluation unit may refer to the environmental information and corrects the evaluation on the service provider.

According to the above configuration, the service provider evaluation unit can correct a change of the degree-of-ease of the service user based on the environmental information of the service providing location or the environmental information external of the service providing location. Accordingly, since a change of the degree of ease not resulting from a behavior of the service provider can be corrected, the evaluation on the service provider can be more accurately calculated.

In order to solve the above issue, an evaluation device according to a third aspect of the invention may further include a location information obtaining unit obtaining location information of a service providing location, and the service provider evaluation unit may refer to the location information and corrects the evaluation on the service provider.

According to the above configuration, the service provider evaluation unit can correct a change of the degree-of-ease of the service user based on the location information of the service providing location. Accordingly, since a change of the degree of ease not resulting from a behavior of the service provider can be corrected, the evaluation on the service provider can be more accurately calculated.

In order to solve the above issue, in an evaluation device according to a fourth aspect of the invention, the service user information obtaining unit may obtain the countenances of the service user before and after use of a service, and the information analysis unit may refer to the countenances of the service user before and after use of the service and calculate the degree-of-ease information of the service user.

According to the above configuration, the information analysis unit, the degree-of-ease information of the service user can be calculated based on a change of the countenances of the service user before and after use of the service. Accordingly, the evaluation device can more accurately calculate the change of the degree-of-ease information of the service user due to the use of the service.

In order to solve the above issue, an evaluation system according to a fifth aspect of the invention may include a plurality of evaluation devices as claimed in any one of claims 1 to 4 and a server, each of the evaluation devices may include a first communication unit, the server may include a second communication unit performing communication with the first communication unit and an evaluation record update unit, the evaluation record update unit may obtain the evaluations on the service provider from the evaluation devices via the first communication unit and the second communication unit and create an evaluation record of the service provider, and a first display unit may display the evaluation record of the service provider created by the evaluation record update unit.

According to the above configuration, an evaluation system that obtains the evaluations on the service provider from the evaluation devices and displays the evaluations on the service provider on the display unit can be realized.

In order to solve the above issue, in the evaluation system according to a sixth aspect of the invention, the service user information may include at least one service user property of age, gender, nationality, and ethnicity of the service user, and the number of times of use of service, and the first display unit may display the evaluation on the service provider in a state classified for each of the service user property.

According to the above configuration, the user can be informed of the evaluation on the service provider for each service user property.

In order to solve the above issue, in the evaluation system according to a seventh aspect of the invention, the service user information obtaining unit may obtain a countenance of a passenger, and the service provider evaluation unit may calculate an evaluation on a driver driving a vehicle in which the passenger takes a ride.

According to the above configuration, a technology with which it is possible to evaluate a driver with whom a passenger can take a ride with ease can be realized.

In order to solve the above issue, a vehicle according to an eighth aspect of the invention may include the evaluation device of the first to fourth aspects or the evaluation system of any of the fifth to seventh aspects.

According to the above configuration, the vehicle can evaluate a service provider from which a service user can receive a service with ease.

In order to solve the above issue, a program according to a ninth aspect of the invention may be a program for a computer to function as the evaluation device of any of the first to fourth aspects. The program may be a program for the computer to function as the service user information obtaining unit, the information analysis unit, and the service provider evaluation unit.

According to the above configuration, the same effects as those of the first aspect can be attained.

### [Effects of Invention]

According to an aspect of the invention, a technology with which it is possible to evaluate a service provider from which a service user can receive a service with ease can be realized.

### BRIEF DESCRIPTION OF THE DRAWINGS

FIG. 1 is a block diagram illustrating an example of a schematic configuration of an evaluation device and an evaluation system according to Embodiment 1 of the invention.
FIG. 2 is a diagram illustrating an example of obtaining passenger information of a passenger according to Embodiment 1 of the invention.
FIG. 3 is a diagram illustrating Calculation Example 1 for degree-of-ease information of a passenger by the evaluation device according to Embodiment 1 of the invention.
FIG. 4 is a diagram illustrating Calculation Example 2 for degree-of-ease information of a passenger by the evaluation device according to Embodiment 1 of the invention.
FIG. 5 is a diagram illustrating Calculation Example 3 for degree-of-ease information of a passenger by the evaluation device according to Embodiment 1 of the invention.
FIG. 6 is a diagram illustrating Evaluation Example 1 for a driver by the evaluation device according to Embodiment 1 of the invention.
FIG. 7 is a flowchart illustrating an example of a flow of a driver evaluating process according to Embodiment 1 of the invention.

### DESCRIPTION OF THE EMBODIMENTS

Hereinafter, an embodiment according to an aspect of the invention (hereinafter also referred to as "the present embodiment") will be described with reference to the drawings. However, the present embodiment described below is merely an example of the invention in every respect. Various improvements and modifications can be made without departing from the scope of the invention. That is, in implementing the invention, a specific configuration according to the present embodiment may be appropriately adopted. The data appearing in the present embodiment is described in a natural language, more specifically, in a pseudo language, a command, a parameter, a machine language, and the like that can be recognized by a computer. Furthermore, for the ease of descriptions, members having the same functions as the members described in each embodiment are denoted by the same reference numerals, and description thereof will be omitted as appropriate.

### [Embodiment 1]

### § 1 Applicable Example

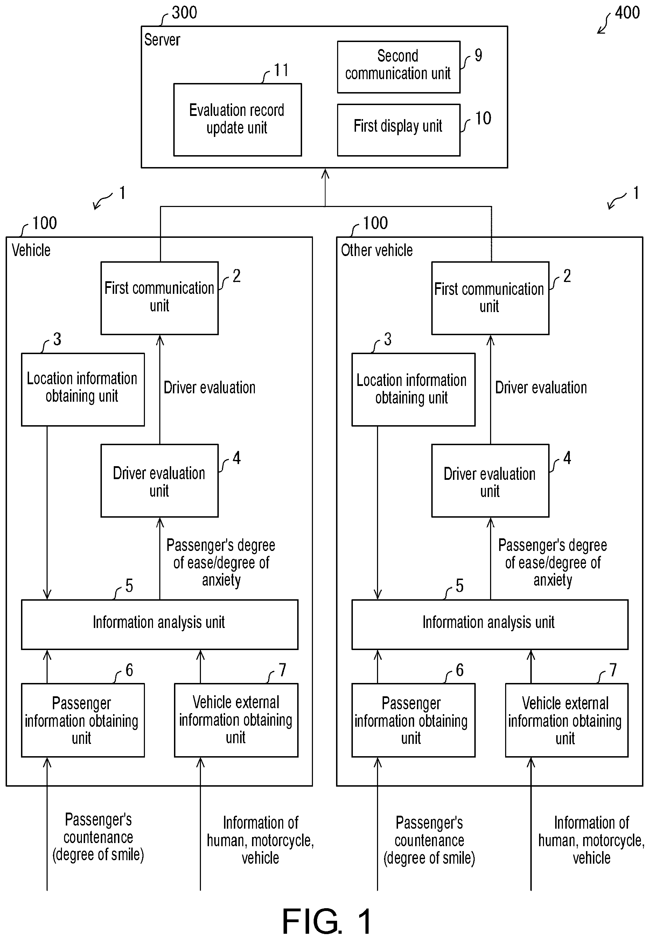

Firstly, an example of a case for which the invention is suitable is described with reference to FIG. 1. FIG. 1 illustrates an example of a schematic configuration of an evaluation system 400 according to the present embodiment. The evaluation system 400 according to the present embodiment is a system for obtaining countenance information indicating the countenance of a passenger taking a ride in a vehicle 100 by a passenger information obtaining unit 6, obtaining degree-of-ease information indicating a degree of ease of the passenger from the countenance information by an information analysis unit 5, and referring to the degree-of-ease information of the passenger and calculating an evaluation on a driver.

As shown in FIG. 1, the evaluation system 400 includes an evaluation device 1 and a server 300. The evaluation device 1 includes a passenger information obtaining unit 6 (service user information obtaining unit) for obtaining the countenance information of the passenger, the information analysis unit 5 for obtaining the degree-of-ease information of the passenger from the countenance information, and a driver evaluation unit 4 (service provider evaluation unit) for referring to the degree-of-ease information of the passenger and calculating the evaluation on the driver. In addition, the evaluation device 1 may also include a first communication unit 2, a location information obtaining unit 3, and a vehicle-external information obtaining unit 7 (environmental information obtaining unit). The server 300 includes an evaluation record update unit 11, a second communication unit 9, and a first display unit 10.

Accordingly, the evaluation system 400 according to the present embodiment is capable of calculating, as the evaluation on the driver, properties such as skills, like customer care attitude of the driver, etc., and personality other than driving skills.

### §2 Configuration Example

In the following, an example of the configuration of the evaluation device 1 and the evaluation system 400 according to Embodiment 1 of the invention will be described in detail with reference to FIG. 1. While the configuration for obtaining the countenance of the passenger is not particularly limited, in the present embodiment, the countenance of the passenger is obtained by obtaining the passenger information including countenance information indicating the countenance of the passenger.

In Embodiment 1, the service provider is a driver, and the service user is a passenger taking a ride in a vehicle driven by the driver. However, the present embodiment is not limited thereto.

In the present embodiment, a configuration member of the evaluation device 1 is provided in the vehicle 100, and the server 300 is provided outside the vehicle 100. However, the present embodiment is not limited thereto. In an example, the driver evaluation unit 4 may also be provided in the server 300. In another example, the driver evaluation unit 4 and the information analysis unit 5 may also be provided in the server 300.

The passenger information obtaining unit 6 obtains the passenger information including the countenance information indicating the countenance of the passenger. It suffices as long as the countenance information obtained by the passenger information obtaining unit 6 includes sufficient information for calculating the degree-of-ease information to be described afterwards, such as including degree-of-smile information indicating a degree of smile of the passenger. How the passenger information obtaining unit 6 obtains the countenance information of the passenger is not particularly limited. For example, the countenance information can be obtained by using a countenance estimation device to which conventional technologies for estimating the countenance of a person is applied.

The countenance estimation device can also calculate the countenance information of the passenger by machine learning. The specific configuration of the learning process for obtaining the countenance information is not particularly limited in the present embodiment and, as examples, any of the following machine learning techniques or a combination thereof can be used.

### Support Vector Machine (SVM)

Clustering
Inductive Logic Programming (ILP)
Genetic algorithm (GP)
Baysian Network (BN)
Neural Network (NN)

In the case where a neural network is used, data may be processed in advance and used for a neural network input. In such processing, in addition to one-dimensional arrangement or multi-dimensional arrangement of the data, techniques such as data argumentation, etc., can be used.

In addition, in the case where a neural network is used, a convolutional neural network (CNN) including a convolutional process may also be used. More specifically, it may also be a configuration in which, as one or a plurality of layers included in the neural network, a convolutional layer performing convolutional computation is provided, and filter computation (product-sum computation) with respect to input data input to the layer is performed. In addition, during the filter computation, a process such as padding may also be used together, or a stride width that is appropriately set may also be adopted.

In addition, as the neural network, a multi-layer type or ultra multi-layer type neural network with tens to thousands of layers may also be used.

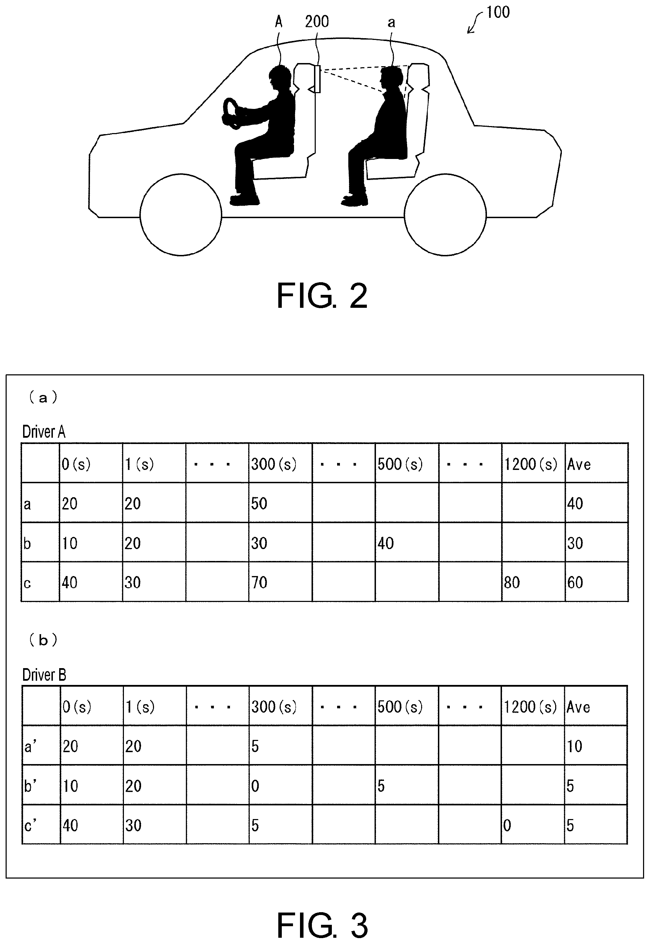

FIG. 2 is a diagram illustrating an example of obtaining passenger information of a passenger a. In the present embodiment, the vehicle 100 includes a terminal device 200 including an image capturing unit and a second display unit. The terminal device 200 may be, for example, a tablet type terminal device. In addition, there may also be a plurality of passengers taking a ride. In such case, the passenger information obtaining unit 6 obtains the passenger information of the plurality of passengers. In addition, the vehicle 100 is not limited to a common vehicle, and also includes a bus, a bicycle, a rickshaw, a motorcycle, and a tricycle (e.g., an electric tuk-tuk), etc.

The image capturing unit included in the terminal device 200 captures an image of an area including the face of the passenger a. The image capturing unit provides the captured image to the countenance estimation device. The countenance estimation device refers to the captured image, estimates the countenance of the passenger a, and calculates the countenance information. The countenance estimation device supplies the countenance information to the passenger information obtaining unit 6. The countenance estimation device may be provided in the vehicle 100, and may also be provided in the server 300, etc., to be described afterwards outside the vehicle 100.

The terminal device 200 may also display an operation screen on which the passenger a designates a destination, etc., of the vehicle 100 on the second display unit. With the terminal device 200 displaying the operation screen, etc., on the second display unit, since the face of the passenger a tends to face the terminal device 200, the image capturing unit included in the terminal device 200 can suitably capture an image of the area including the face of the passenger a.

The passenger information obtaining unit 6 may also obtain the countenance information of the passenger a before and after taking the ride. Accordingly, in the case where the degree of smile of the passenger a significantly increases from that before taking the ride or the degree of smile of the passenger a significantly decreases from that before taking the ride, the driver evaluation unit 4 to be described afterwards can still more accurately calculate the evaluation on a driver A based on a change of the degree-of-ease of the passenger a through taking the ride. In the case where the passenger information obtaining unit 6 obtains the countenance information of the passenger a before and after taking the ride, the image capturing unit may also be provided in a ride ticket vending machine, etc., other than the vehicle 100, for example.

The passenger information obtaining unit 6 may also obtain, as passenger properties (service user properties), at least one of the age, gender, nationality, ethnicity of the passenger, the number of rides in the vehicle driven by the driver A, the number of rides in a vehicle owned by a taxi company to which the driver A belongs. With the passenger information obtaining unit 6 obtaining the passenger properties such as the above and supplying the passenger properties to the information analysis unit 5, the driver evaluation unit 4 to be described afterwards can classify the evaluation on each driver for each passenger property.

In the case where the passenger information obtaining unit 6 obtains the passenger properties, such as age, gender, ethnicity as described above, in an example, the passenger information obtaining unit 6 refers to a captured image and specifies the passenger properties. In another example, the taxi company to which the driver A belongs provides membership service, and the passenger information obtaining unit 6 may also refer to the membership information which the passenger a inputs and obtain the passenger properties as described above. Particularly, regarding passenger properties which are difficult to determine from the captured image, such as nationality, the passenger information obtaining unit 6 may refer to membership information and obtain such passenger properties.

The configuration in which the passenger information obtaining unit 6 obtains the number of rides in the vehicle driven by the driver A is not particularly limited. For example, it can be configured that the passenger a supplies the information of taking a ride in the vehicle driven by the driver A to the server 300, and the server 300 calculates the number of rides of the passenger a in the vehicle driven by the driver A, and supplies the number of rides to the passenger information obtaining unit 6. For example, at the time when the passenger a takes a ride in the vehicle 100, by operating the terminal device 200, the passenger a may also supply the information of taking a ride in the vehicle driven by the driver A to the server 300. It may also be configured that the passenger a also subjectively evaluates the customer care attitude of the driver A and supplies the evaluation together with the information of taking a ride in the vehicle driven by the driver A to the server 300. It may also be that the driver A does not drive the same vehicle 100.

The vehicle-external information obtaining unit 7 obtains the vehicle-external information (environmental information) of the vehicle 100. The vehicle-external information may be information within a predetermined range from the vehicle 100. In the vehicle-external information obtaining unit 7, a light detection and ranging (LIDAR) having a function of analyzing a distance to a target or properties of the target by pulse-emitting laser light and measuring the returned pulse can be suitably used. The vehicle-external information obtaining unit 7 is not limited to the LIDAR, and may also have a configuration of obtaining information external of the vehicle 100 by a radar, a sonar, or a combination thereof. In addition, the vehicle-external information obtaining unit 7 may also include a camera capable of capturing an image in a visible light region or outside the visible light region.

A detailed 3D image can be generated from the information external of the vehicle 100 obtained by the vehicle-external information obtaining unit 7 using a LIDAR. By analyzing the detailed 3D image, the information analysis unit 5 can determine whether a person is male or female, an adult or a child, and specify a vehicle-external event. As examples of vehicle-external events, vehicle-external information includes people rushing out, accidents without involving the vehicle 100 itself, etc.

The location information obtaining unit 3 obtains the location information of the vehicle 100, and supplies the location information to the information analysis unit 5. The information analysis unit 5 to be described afterwards refers to the location information and specifies information relating to the scenery such as famous spots which can be seen from inside the vehicle 100. The location information obtaining unit 3 can obtain location information from a location detection unit (not shown) including a GPS antenna, a Wi-Fi (registered trademark) antenna, a compass, and an acceleration sensor, etc., and configured to be able to detect the location information such as the direction and the current location with respect to a moving object 150. Or, the location information obtaining unit 3 may also obtain the location of the vehicle 100 by means other than the location detection unit. For example, in the case where the vehicle 100 performs wireless communication while moving, the location information of the vehicle 100 may also be obtained from a base station of wireless communication. In addition, in the description of the present embodiment, the term "location information" simply refers to the location information of the vehicle 100.

The information analysis unit 5 refers to the passenger information including the countenance information of the passenger, and calculates the degree-of-ease information indicating the degree of ease of the passenger and the degree-of-anxiety information indicating the degree of anxiety of the passenger. The information analysis unit 5 calculates the degree-of-ease information and the degree-of-anxiety information from the degree-of-smile information of the passenger a, for example. For example, as to be described afterwards, the information analysis unit 5 can set an average of the degree-of-smile information of the passenger a as the degree of ease of the passenger a. In another example, the information analysis unit 5 can calculate the degree of ease based on the accumulation of time during which the degree-of-smile information of the passenger a is outside a predetermined range. In addition, the information analysis unit 5 may also calculate the stiffness of the passenger a based on the degree of smile of the countenance of the passenger a, and calculate the degree-of-anxiety information of the passenger a based on the stiffness. In addition, the degree-of-ease information and the degree-of-anxiety information of the passenger can also be calculated by machine learning. The information analysis unit 5 may also calculate only the degree of ease of the passenger.

The information analysis unit 5 may also refer to the vehicle-external information and the location information and correct the degree-of-ease information and the degree-of-anxiety information of the passenger a. With the information analysis unit 5 referring to the vehicle-external information and the location information and correcting the degree-of-ease information and the degree-of-anxiety information of the passenger a, since the information analysis unit 5 can correct the variation of the degree-of-ease information and the degree-of-anxiety information of the passenger a based on the vehicle-external information and the location information, the driver evaluation unit 4 to be described afterwards can more accurately calculate the evaluation on the driver A. Regarding the correction of the degree-of-ease information by the information analysis unit 5, examples will be described afterwards. The information analysis unit 5 supplies the calculated degree-of-ease information and degree-of-anxiety information to the driver evaluation unit 4. The information analysis unit 5 may also correct the degree-of-smile information to correct the degree-of-ease information and the degree-of-anxiety information.

The driver evaluation unit 4 calculates the evaluation on the driver A. How the evaluation on the driver A is calculated is not particularly limited. For example, as an example to be described afterwards, the driver evaluation unit 4 may also set the average of the degree-of-ease information and the degree-of-anxiety information of the passenger as the evaluation on the driver A. The driver evaluation unit 4 supplies the calculated evaluation on the driver A to the first communication unit 2. The driver evaluation unit 4 may also refer to the passenger properties and classify the evaluation on each driver for each passenger property.

With the driver evaluation unit 4 evaluating the driver A, the evaluation device 1 and the evaluation system 400 can evaluate a driver with whom the passenger can take a ride with ease. With the evaluation device 1 and the evaluation system 400 according to the present embodiment, the user can make use of transportation facilities such as taxi more safely. The evaluation device 1 and the evaluation system 400 are particularly effectively in an area in which the quality of drivers may be poor due to reasons such as poor security. In the area in which the quality of drivers may be poor, there are cases where whether the driver is a driver with whom one can take a ride with ease from a perspective other than the driving skill of the driver cannot be determined. By using the evaluation device 1 and the evaluation system 400, since the passenger can verify the evaluation on the driver, the passenger can choose a driver with whom one can take a ride with ease.

In an example, the first communication unit 2 transmits the evaluation on the driver A to the second communication unit 9 of the server 300. The first communication unit 2 may be a device that transmits and receives information in a wired or wireless manner. In addition, it may also be configured that a recording device is provided in place of the first communication unit 2, a reading device is provided in place of the second communication unit 9, the recording device records the evaluation on the driver A in a memory card, such as a magnetic disc, an optical disc, an SD card, and a CF card, etc., and the reading device reads the evaluation on the driver A that is recorded.

The first communication unit 2 may also supply the evaluation on the driver A to a unit other than the second communication unit 9. For example, the first communication unit 2 may also transmit the evaluation on the driver A to a terminal device independent from the vehicle 100.

The second communication unit 9 obtains the evaluation on the driver A from the evaluation unit 1 and supplies an evaluation record to an evaluation record update unit 11. The second communication unit 9 may also obtain the evaluations on the driver A from the evaluation devices 1 provided on a plurality of vehicles 100. In addition, the second evaluation unit 9 may also obtain evaluations on a plurality of drivers from a plurality of evaluation devices 1.

The evaluation record update unit 11 stores the evaluation on the driver A obtained from the evaluation device 1 via the first communication unit 2 and the second communication unit 9, refers to the stored evaluation on the driver A, and creates a record (referred to as an evaluation record on the driver A) of the evaluation on the driver A. In addition, the evaluation record update unit 11 updates the evaluation record of the driver A at a regular interval. The evaluation record update unit 11 supplies the created evaluation record of the driver A to the first display unit 10. In addition, the evaluation record update unit 11 may also transmit, via the second communication unit 9, the evaluation record of the driver A to a display device other than the first display unit 10. The evaluation record update unit 11 may also obtain and store, via the first communication unit 2 and the second communication unit 9, the evaluations on the driver A from the evaluation devices 1, refer to the stored evaluations on the driver A, and create the evaluation record of the driver A. According to the configuration, the evaluation record update unit 11 creates the evaluation record of the driver A based on the evaluations on the driver obtained from the evaluation devices 1. Accordingly, the evaluation record update unit 11 can create the evaluation record of the driver A that is more accurate. The evaluation record update unit 11 may also refer to the stored evaluations on the drivers obtained from the evaluation devices 1 via the first communication unit 2 and the second communication unit 9, and respectively create the evaluation records of the drivers.

The first display unit 10 displays the evaluation record of the driver A created by the evaluation record update unit 11. The first display unit 10 may also be provided outside the server 300. In addition, a plurality of first display units 10 may also be provided. In addition, a terminal device owned by the user, etc., may also be set as the first display unit 10. In this case, the second communication unit 9 supplies the evaluation record of the driver A received from the evaluation record update unit 11 to the first display unit 10. It may also be that the second communication unit 9 supplies the evaluation record of the driver A to the second display unit provided on the terminal device 200, and the second display unit displays the evaluation record of the driver A.

In the case where the driver evaluation unit 4 classifies the evaluation on each driver for each customer property, the first display unit 10 may also classify the evaluation on each driver for each customer property and display the classified evaluation on each driver for each customer property. Accordingly, the evaluation device 1, for example, can propose a service provider compatible with the service user based on the service user properties.

In the case where the passenger a subjectively evaluates the customer care attitude of the driver A and the server 300 supplies the evaluation to the first display unit 10, the first display unit 10 may also combine and display the evaluation on the driver A calculated by the evaluation unit 4 when the passenger a takes a ride and the subjective evaluation on the driver A by the passenger a. In addition, the evaluation record update unit 11 may also refer to the subjective evaluation on the driver A by the passenger a and correct the evaluation on the driver A calculated by the driver evaluation unit 4.

### (Calculation Example 1 of Degree-of-ease Information)

Calculation Example 1 of the degree-of-ease information of the passenger by the information analysis unit 5 is described with reference to FIG. 3. (a) of FIG. 3 illustrates a calculation example of the degree-of-ease information of passengers a to c taking a ride in the vehicle 100 driven by the driver A, and (b) of FIG. 3 illustrates a calculation example of the degree-of-ease information of passengers a' to c' taking a ride in the vehicle 100 driven by a driver B. In the present example and Calculation Examples 2 and 3 of the degree-of-ease information to be described afterwards, it is assumed that the vehicle 100 is a circulating taxi circulating on a predetermined route. However, the present embodiment is not limited thereto.

In the example of FIG. 3, the vehicle 100 is circulating on the predetermined route at a cycle of 1200 seconds. The customer information obtaining unit 6 obtains the degree-of-smile information of the passenger at every predetermined time between the moment that the vehicle 100 sets off until the circulation ends.

As shown in (a) and (b) of FIG. 3, in the present example, the passenger information obtaining unit 6 obtains the degree-of-smile information of the passenger at every 1 second. The information analysis unit 5 refers to the degree-of-smile information of each passenger obtained at every predetermined time, and calculates the average of the degree-of-smile information of each passenger as the degree-of-ease information of each passenger. As shown in (a) and (b) of FIG. 3, the degree-of-ease information of the passengers a to c taking a ride in the vehicle 100 driven by the driver A is higher than the degree-of-ease information of the passengers a' to c' taking a ride in the vehicle 100 driven by the driver B. Accordingly, the driver evaluation unit 4 calculates the evaluation on the driver A to be higher than the evaluation on the driver B.

### (Calculation Example 2 of Degree-of-ease Information)

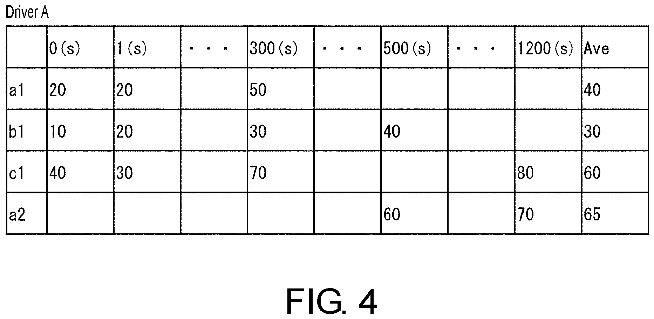

FIG. 4 is a diagram illustrating Calculation Example 2 for the degree-of-ease information of a passenger by the information analysis unit 5. In the example, the passenger information obtaining unit 6 obtains, as the passenger property, the number of rides of the passenger in the vehicle driven by each driver. In FIG. 4, a1 to c1 indicate the degree-of-smile information and the degree-of-ease information when the passengers a to c take a ride in the vehicle 100 driven by the driver A for the first time. In addition, a2 indicates the degree-of-smile information and the degree-of-ease information when the passenger a takes a ride in the vehicle 100 driven by the driver A for the second time.

The information analysis unit 5 classifies the degree-of-ease information of the passenger for each ride in the vehicle driven by each driver and supplies the classified degree-of-ease information to the driver evaluation unit 4. In the present example, the information analysis unit 5 supplies, respectively as the degree-of-ease information of the first ride among the number of rides and the degree-of-ease information of the second ride among the number of rides, the degree-of-ease information of a1 to c1 and the degree-of-ease information of a2 to the driver evaluation unit 4. In another example, the information analysis unit 5 may also take, for each ride among the number of rides, the average of the degrees of smile of all the passengers as the degree-of-ease information of each ride among the number of rides. In an application of the present example, the information analysis unit 5 may take the average of the degrees of smile of all the moments of a1 to c1 as the degree-of-ease information of the first ride among the number of rides. According to the configuration, the driver evaluation unit 4 can calculate the evaluation on the driver for each ride among the number of rides. Accordingly, as the number of rides increases, the driver evaluation unit 4 can evaluate whether the driver can gain trust from each passenger.

In another example, instead of calculating the degree-of-ease information of each ride among the number of rides, the information analysis unit 5 may also take the average of the degree-of-smile information of all the passengers and calculate the degree-of-ease information without considering the number of rides. In addition, the information analysis unit 5 may also calculate both the degree-of-ease information of each ride among the number of rides and the degree-of-ease information without considering the number of rides and supply the degree-of-ease information of each ride among the number of rides and the degree-of-ease information without considering the number of rides to the driver evaluation unit 4. Accordingly, the driver evaluation unit 4 can calculate both the evaluation on the driver for each ride among the number of rides and the degree-of-ease information on the driver without considering the number of rides. Therefore, the user can learn more detailed evaluation on the driver.

### (Calculation Example 3 of Degree-of-ease Information)

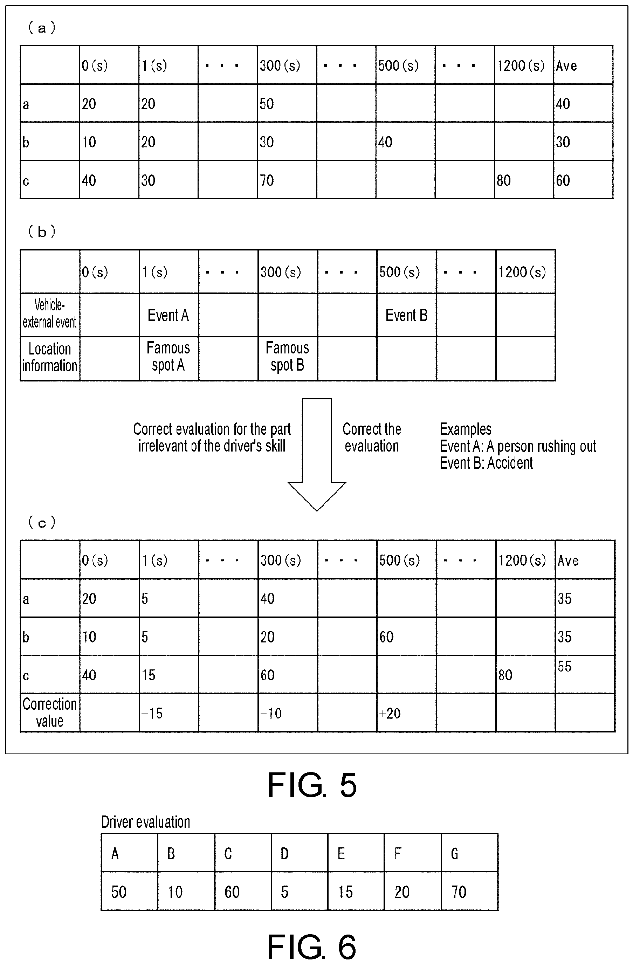

FIG. 5 is a diagram illustrating Calculation Example 3 for the degree-of-ease information of a passenger by the information analysis unit 5. In the example, the information analysis unit 5 refers to the location information and the vehicle-external information of the vehicle 100 and corrects the degree-of-smile information.

(a) of FIG. 5 illustrates the degree-of-smile information of the passengers a to c taking a ride in the vehicle 100 driven by the driver A at each moment and the degree-of-ease information calculated from the degree-of-smile information. In the present example, the passengers a to c are assumed to all take a ride in the vehicle 100. (b) of FIG. 5 indicates information about vehicle-external events that happen outside the vehicle 100 and famous spots which can be seen from inside the vehicle 100 at respective moments. As shown in (b) of FIG. 5, at one second after the ride of the passengers 1 to c starts, there is a person rushing out outside the vehicle (Event A). In addition, also after one second, a famous spot A can be seen from inside the vehicle 100. At 300 seconds after the ride starts, a famous spot B can be seen from inside the vehicle 100. In addition, at 500 seconds after the ride starts, an accident without involving the vehicle 100 happens outside the vehicle (Event B).

The information analysis unit 5, at each moment, refers to the location information and the vehicle-external information of the vehicle 100, and specifies information relating to the vehicle-external events and the famous spots which can be seen from inside the vehicle. The information analysis unit 5 refers to the information relating to the vehicle-external events that are specified and famous spots, calculates a correction value for correcting the degree-of-smile information of the vehicles a to c, and correct the degree-of-smile information.

In the present example, since there is a person rushing out outside the vehicle at one second after the ride starts, it is considered that the degrees of smile of the passengers a to c decrease but the decrease has nothing to do with the behavior of the driver A. However, since the famous spot A can be seen at one second after the ride starts, it is considered that the degrees of smile of the passengers a to c increase but the increase has nothing to do with the behavior of the driver A. Therefore, the information analysis unit 5 determines, at one second after the ride starts, that the degrees of smile of the passengers a to c are in a high state but the state has nothing to do with the behavior of the driver A, and calculates the correction value for correcting the degree-of-smile information of the passengers a to c as -15. In addition, since the famous spot B can be seen at 300 seconds after the ride starts, it is considered that the degrees of smile of the passengers a to c increase but the increase has nothing to do with the behavior of the driver A. Accordingly, the information analysis unit 5 determines, at 300 seconds after the ride starts, that the degrees of smile of the passengers a to c are in a high state but the state has nothing to do with the behavior of the driver A, and calculates the correction value for correcting the degree-of-smile information of the passengers a to c as -10. In addition, since an accident happens outside the vehicle at 500 seconds after the ride starts, it is considered that the degrees of smile of the passengers a to c decrease but the decrease has nothing to do with the behavior of the driver A. Accordingly, the information analysis unit 5 calculates the correction value for correcting the degree-of-smile information of the passengers a to c as +20. The information analysis unit 5 may also correct the degree-of-ease information without correcting the degree-of-smile information at each moment.

In addition, to calculate the correction value, the information analysis unit 5 may also refer to information relating to the popularity of famous spots, the scenery and famous spots which the passengers like, etc. The configuration for the information analysis unit 5 to refer to such information is not particularly limited. For example, the location information obtaining unit 3 can obtain map information in which information relating to the popularity of each famous spot is attached and supplies the map information to the information analysis unit 5. In addition, in the case where the taxi company to which the driver A belongs provides membership service, it can be configured that the information relating to the scenery and the famous spots which the passenger a likes is supplied to the server 300 as member information, and the passenger information obtaining unit 6 refers to the member information and supplies the member information to the information analysis unit 5.

### (Evaluation Example 1 of Driver)

FIG. 6 is a diagram illustrating Evaluation Example 1 for a driver by the driver evaluation unit 4. In the example of FIG. 6, the driver evaluation unit 4 calculates the average of the degree-of-ease information of the passengers taking a ride in the vehicle driven by each of the drivers A to G and evaluates the drivers A to G.

### (Flow of Driver Evaluation Process)

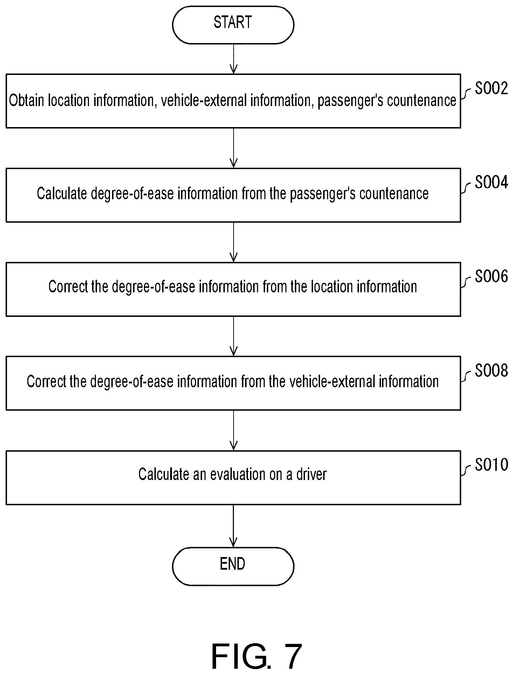

An example of the flow of the driver evaluation process is described with reference to FIG. 7. FIG. 7 is a flowchart illustrating an example of the flow of the driver evaluating process. The details of each process are as described above.

### (Step S002)

Firstly, at Step S002, the location information obtaining unit 3 obtains the location information of the vehicle 100, and supplies the location information to the information analysis unit 5. The passenger information obtaining unit 6 obtains the passenger information, and supplies the passenger information to the information analysis unit 5. The vehicle-external information obtaining unit 7 obtains the vehicle-external information, and supplies the vehicle-external information to the information analysis unit 5.

### (Step S004)

Then, at Step S004, the information analysis unit 5 refers to the passenger information including the countenance information of the passenger, and calculates the degree-of-ease information of the passenger. The information analysis unit 5 may also refer to the countenance information of the passenger and calculate the degree of anxiety of the passenger.

### (Step S006)

Then, at Step S006, the information analysis unit 5 refers to the vehicle-external information and corrects the degree-of-ease information.

### (Step S008)

Then, at Step S008, the information analysis unit 5 refers to the location information, corrects the degree-of-ease information, and supplies the corrected degree-of-ease information to the driver evaluation unit 4.

The order of performing the processes of Steps S006 to S008 is not particularly limited, it may also be that the process of Step S006 is performed before the process of Step S008.

### (Step S010)

Then, at Step S010, the driver evaluation unit 4 refers to the degree-of-ease information and calculates the evaluation on the driver.

### [Embodiment 2]

Embodiment 2 of the invention will be described in the following. For the ease of descriptions, members having the same functions as the members described in the above embodiment are denoted by the same reference numerals, and the description thereof will not be repeated. In Embodiment 2, the service provider and the service user may be other than drivers and passengers, and may be those providing services and those using the services in all service industries.

The evaluation device of the embodiment has the same configuration as the evaluation device 1 of Embodiment 1, except that the passenger information obtaining unit 6 is a service user information obtaining unit which obtains service user information, the driver evaluation unit 4 is a service provider evaluation unit that calculates an evaluation on the service provider, and the vehicle-external information obtaining unit 7 is an environmental information obtaining unit which obtains environmental information that is information of a service providing location or information external of the service providing location.

The environmental information obtaining unit obtains information of the service providing location or information external of the service providing location as the environmental information. For example, in the case where the service is provided in a building, the environmental information obtaining unit obtains the information in the building and outdoor from the building within a predetermined range.

The location information obtaining unit 3 according to the embodiment obtains the location information of the service providing location. For example, in the case where the service is provided in a building, the location information obtaining unit 3 obtains the location information of the building. In the case where the service providing location moves, as in Embodiment 1, the location information obtaining unit 3 obtains the location information of the service providing location at each predetermined time.

### [Implementation Example by Software]

The control block of the evaluation device 1 (particularly the passenger information obtaining unit 6 (service user information obtaining unit), the information analysis unit 5, and the driver evaluation unit 4 (service provider evaluation unit)), the vehicle 100, and the server 300 may be realized by logic circuits (hardware) formed by integrated circuits (IC chips), etc., and may also be realized by software.

In the latter case, the evaluation device 1 includes a computer executing a command of a program which is software realizing the respective functions. The computer includes, for example, one or more processors as well as a computer-readable recording medium storing the program. Then, in the computer, the processor reads and executes the program from the recording medium, thereby achieving the objective of the invention. As the processor, a central processing unit (CPU), for example, can be used. As the recording medium, in addition to a "non-transitory tangible medium", such as a read only memory (ROM), a tape, a disk, a card, a semiconductor memory, a programmable logic circuit, etc., can be used. In addition, a random access memory (RAM) that expands the program may be further included. In addition, the program may also be supplied to the computer via any transmission medium (communication network, broadcast wave, etc.) able to transmit the program. An aspect of the invention may also be realized in the form in which the program is embodied by electronic transmission and data signals are embedded in carrier waves.

The invention is not limited to the respective embodiments described above, and various modifications are possible within the scope shown in the claims, and embodiments obtained by appropriately combining technical means disclosed in different embodiments are also included in the technical scope of the invention.

### [Description of Symbols]

- 1:: Evaluation device
- 2:: First communication unit
- 3:: Location information obtaining unit
- 4:: Driver evaluation unit
- 6:: Passenger information obtaining unit
- 7:: Vehicle external information obtaining unit
- 10:: First display unit
- 100:: Vehicle
- 200:: Terminal device
- 300:: Server
- 400:: Evaluation system

## Claims

1. An evaluation device, comprising:
a service user information obtaining unit, obtaining a countenance of a service user;
an information analysis unit, calculating degree-of-ease information indicating a degree of ease of the service user from the countenance; and
a service provider evaluation unit, calculating an evaluation on a service provider from the degree-of-ease information.

2. The evaluation device as claimed in claim 1, further comprising:
an environmental information obtaining unit, obtaining environmental information which is information of a service providing location or information external of the service providing location, wherein the service provider evaluation unit refers to the environmental information and corrects the evaluation on the service provider.

3. The evaluation device as claimed in claim 1 or 2, further comprising a location information obtaining unit, obtaining location information of a service providing location, wherein the service provider evaluation unit refers to the location information and corrects the evaluation on the service provider.

4. The evaluation device as claimed in any one of claims 1 to 3, wherein the service user information obtaining unit obtains the countenances of the service user before and after use of a service, and the information analysis unit refers to the countenances of the service user before and after use of the service and calculates the degree-of-ease information of the service user.

5. An evaluation system, comprising:
a plurality of evaluation devices as claimed in any one of claims 1 to 4; and
a server,
wherein each of the evaluation devices comprises a first communication unit,
the server comprises a second communication unit performing communication with the first communication unit and an evaluation record update unit,
the evaluation record update unit obtains the evaluations on the service provider from the evaluation devices via the first communication unit and the second communication unit and creates an evaluation record of the service provider, and
a first display unit displays the evaluation record of the service provider created by the evaluation record update unit.

6. The evaluation system as claimed in claim 5, wherein the service user information comprises at least one service user property of age, gender, nationality, and ethnicity of the service user, and the number of times of use of service, and the first display unit displays the evaluation on the service provider in a state classified for each of the service user property.

7. The evaluation device as claimed in any one of claims 1 to 4 or the evaluation system as claimed in claim 5 or 6, wherein the service user information obtaining unit obtains a countenance of a passenger, and the service provider evaluation unit calculates an evaluation on a driver driving a vehicle in which the passenger takes a ride.

8. A vehicle, comprising the evaluation device as claimed in any one of claims 1 to 4 or the evaluation system as claimed in any one of claims 5 to 7.

9. A program for a computer to function as the evaluation device as claimed in any one of claims 1 to 4, wherein the program is a program for the computer to function as the service user information obtaining unit, the information analysis unit, and the service provider evaluation unit.
